# EUROPEAN PATENT APPLICATION

(11) **EP 1 860 414 A1**
(43) Date of publication of application: **28.11.2007**
(21) Application number: 06425358.6
(22) Date of filing: 26.05.2006
(51) Int. Cl.: G01K 7/18

(54) **Temperature measuring system**

(71) Applicant: Webresults S.r.l., 24124 Bergamo (IT)
(72) Inventor: Coslovi, Lorenzo, 24124 Bergamo (IT)
(74) Representative: Robba, Eugenio

(57) **Abstract**

The present invention relates to a temperature measuring system comprising a sensor (12), of the immersion PRT (Platinum Resistance Thermometers) kind, arranged for generating electric signals representing a substance temperature through values of electric resistance, a managing circuit (15) connected to the sensor and arranged for measuring the substance temperatures on the basis of the generated values of electric resistance, a control circuit (18) connected to the managing/measuring circuit (15) and arranged for displaying the measured temperatures. The sensor (12) of the system (10) comprises a sensitive element having at least two rheophores electrodes made of a determined material, a plurality of interconnecting wires made of said material and having corresponding ends connected to the rheophores and to the managing/measuring circuit (15) respectively, and at least a metallic material sheath designed so as to contain and to protect from polluting agents the sensitive element (31) and the wires sealed in an inert gas or in dry air.

## Description

### TECHNICAL FIELD

The present invention relates to a temperature measuring system, to a sensor for detecting temperatures by immersion and to a managing circuit associated to the sensor for measuring the electric resistance associated to the temperature.

More particularly, the present invention relates to a high precision temperature measuring system for prevailingly industrial applications.

### PRIOR ART

High precision temperature measuring system are known in the art, for instance for temperature measuring in industrial processes, in research laboratories, in quality control laboratories and the like.

By way of example, US-5,056,048 discloses a precision thermometer comprising a sheath housing a temperature sensitive element and a handle, physically connected to the sheath and housing a measuring digital circuit (managing circuit). More particularly, the known measuring digital circuit is connected by means of four wires to the sensitive element and comprises an interface connector for connecting the circuit to an external visualisation device or display.

The known system has the drawback of requiring a particularly complex measuring circuit for compensating the non-linear behaviour of the sensitive element. Moreover, this known system does not take into account the possible pollution of the sensitive element by polluting agents, said pollution being such as to invalidate the long-term stability of the measurements.

US-5,876,122 also discloses a device comprising a temperature sensor consisting in a sheath, in a temperature sensitive element and in a managing circuit connected to the sensitive element by means of a first pair of connecting wires.

The known device also comprises a second pair of connecting wires between the sheath and the managing circuit, such a configuration allowing the known device to detect - thanks to the second pair of connecting wire - the tension and resistance variations between the sheath and the sensitive element, so as to be able to compensate said variations by means of the managing circuit and to accordingly improve the precision of the device in time.

Also this kind of solution turns out to be particularly complex and, anyway, it can not guarantee a high stability in time.

Indeed, in the Applicant's opinion, a high precision temperature measuring system requires that the stability features as a whole inside the sheath, inside the sensitive element housed therein and, above all, inside the connecting wires between the sensitive element and the resistance/temperature managing/measuring circuit are kept under control.

More particularly, the Applicant has noticed that, beyond additional and anyway less relevant elements, the kind and the modalities of the connection between the sensitive element and the managing/measuring circuit as well as the purity of the materials employed for this connection are the most critical factors to be kept under control, since they greatly influence the stability in time of temperature measuring systems.

### DISCLOSURE OF THE INVENTION

It is an object of the present invention to solve the problems of stability in time of temperature measuring systems, more particularly of industrial and/or laboratory thermometers.

It is also an object of the present invention to provide an extremely simple system that can be easily interfaced with common use devices, such as mobile phones, personal computers, and the like.

This object can be achieved by the temperature measuring system, the sensor and the managing circuit as claimed in the appended claims.

The claims form an integral part of the technical teachings herein provided with reference to the invention.

According to a preferred embodiment, the temperature measuring system according to the present invention comprises a sensor having an external metallic shell (metallic sheath) sealed in an inert gas or in dry air and housing at least a sensitive element with a pair of rheophores and at least a plurality of interconnecting wires, the wires and the rheophores being made of the same material, for instance 99,9999% pure platinum in the best embodiment, or 99,9999% pure silver in another embodiment. Platinum ensures a negligible pollution of the sensitive element and improves the response compared with thermometers employing common metals. Silver, in turn, guarantees a lower pollution than common materials.

According to a further feature of the present invention, the interconnecting wires are insulated from the metallic sheath by means of insulating elements made of quartz or other material providing for high electric insulation upon operation temperature variations and optimum impermeability to the polluting agents.

According to a further feature of the present invention, the system comprises a managing circuit suitable for measuring the temperature values starting from the signals generated by the sensor and for transmitting the measured values to an external control/display circuit also, but not necessarily, through a wireless connection, said external circuit being for instance a hand-held computer, a mobile phone or a properly programmed personal computer.

### BRIEF DESCRIPTION OF THE DRAWINGS

This and other features of the present invention will become evident from the following description of a preferred embodiment, given by way of a non-limiting example, with reference to the accompanying drawings, wherein elements denoted by the same or similar numeral represent components having the same or similar function and structure and wherein:
- Figure 1 is a global view of the system according to the invention;
- Figure 2 is a longitudinal cross section of the sensor according to the invention;
- Figure 3 is a longitudinal cross section of the sensor of Figure 2, partially assembled;
- Figure 4 is a block diagram of the managing circuit of the sensor according to the invention.

### DESCRIPTION OF A PREFERRED EMBODIMENT

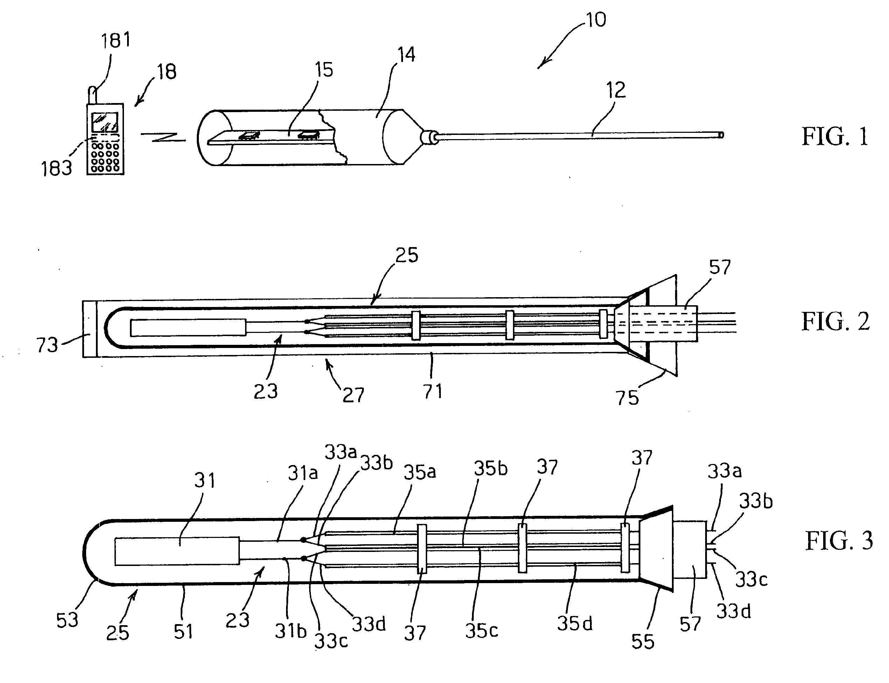

With reference to Figure 1, a system 10 for measuring the temperatures of certain substances, preferably by immersion, comprises a sensor 12, a handle 14, known per se, fixed and/or welded to the sensor 12 and an actuating and controlling external device 18; in the preferred embodiment, a managing circuit 15 is housed inside the handle 14, said managing circuit being connected to the sensor 12 through a plurality of interconnecting wires and to the external device (control circuit) 18, for instance through a wireless connection.

The sensor 12 comprises a sensor assembly 23 (see Figure 2), an internal sheath assembly 25, designed so as to house the sensor assembly, and an external sheath assembly 27, designed so as to house the sensor assembly 23 and the internal sheath assembly 25.

In the preferred embodiment, the sensor assembly 23 comprises a sensitive element 31 (see Figure 3), obtained for instance by means of a sensitive element Pt100, known per se, for instance a Mod. CL.B JIC1604 sensitive element produced by the firm SDL, having a pair of platinum terminals, a first terminal 31 a and a second terminal 31b respectively.

The sensitive element is suitable for varying the electric resistance between the terminals 31a and 31b upon variation of the temperature to which it is subjected.

The sensor assembly further comprises a predetermined number of extension wires, for instance four wires, respectively a first pair 33a and 33b, having a first end welded to the first terminal 31a, and a second pair 33c and 33d, having a first end welded to the second terminal 31b; the pairs of extension wires 33a, 33b and 33c, 33d have respective second ends welded to the managing circuit 15 and they are suitable for connecting the terminal pair 31a,31b to the managing circuit (see Figure 1, Figure 3), as it will be described in detail later on.

In order to obtain a high stability in time of the features of the sensor 12, in the preferred embodiment the extension wires 33a,33b,33c,33d are made of platinum, for instance 99,9999% pure platinum, i.e. of the same material as the pair of terminals 31a,31b, and they are welded to the pair of terminals 31,31b by hydrogen welding. Hydrogen welding allows to obtain a direct contact between the platinum of the terminals and the platinum of the extension wires, thus avoiding the presence of other materials in the welding, which would contribute to the pollution of the material and, consequently, to the deterioration in time of the features of the sensor 12.

The sensor assembly 23 further comprises a plurality of insulating elements, 35a,35b,35c,35d respectively, designed so that each of them covers and houses the length of a corresponding extension wire 33a,33b,33c,33d and suitable for insulating the extension wires from one another.

Finally, the sensor assembly comprises a plurality of insulating discs 37 spacing apart the insulating elements along the extension wires, for instance three insulating discs designed so as to preferably maintain the extension wires 33a,33b,33c,33d equidistant from one another and to reduce the mechanical stresses of the material of the extension wires.

In the preferred embodiment, the insulating elements 35a,35b,35c,35d and the insulating discs 37 are made of a material having a high electric insulation upon temperature variations and capable of protecting the extension wires 33a,33b,33c,33d from polluting agents; for instance, the insulating elements 35a,35b,35c,35d and the insulating discs 37 are made of quartz. According to a possible alternative embodiment, a cylindrical bored insulating element is employed instead of the insulating elements 35a,35b,35c,35d and the insulating discs 37, said insulating element having all along its entire length as many bores as the extension wires, so as to house (protect and keep spaced apart) at its inside the extension wires; in this embodiment, the insulating element is made, for instance, of alumina.

In a further embodiment, in case of less accurate thermometers, 99,9999% pure silver is employed for the extension wires with the above-cited properties.

The internal sheath assembly 25 comprises, for instance, an internal sheath 51, preferably having cylindrical cross section, with a first, closed, semi-spherical end 53 and a second, open, frusto-conical end 55.

In the preferred embodiment, the internal sheath 25 is made of quartz, for the above-mentioned reasons. In thermometers with lower performances, said sheath can be omitted.

The external sheath assembly 27 comprises, for instance, a metallic sheath 71, preferably having cylindrical cross section, with a first end 73 that is closed by a metallic bottom and a second end 75 that is open and has the shape of a sleeve with a closing and screwing nut. During operation, the first end (bottom) 73 is placed at the first end 53 of the internal sheath assembly 25 and the second end 75 is placed at the second end 55 of the internal sheath assembly 25.

The bottom 73 and the second end (underhead sleeve) 75 of the external sheath assembly 27 are welded to the metallic sheath 71, preferably by Tungsten Inert Gas (TIG) welding.

In the preferred embodiment, the external sheath assembly 27 is made of an acid-resistant stainless steel, for instance of AISI 316 stainless steel.

Advantageously, the metallic sheath 71 of the external sheath assembly 27 has an internal diameter greater than the external diameter of the insulating discs 37, so as to facilitate the insertion of the sensor assembly 23 and of the internal sheath assembly 25 into the external sheath assembly 27 during assembling operations, as it will described in detail later on.

The handle 14, made for instance of anodised aluminium, preferably has cylindrical shape and comprises at one of its ends an internal threading designed so as to secure the handle 14 to the sensor 12, as it will be described in detail later on.

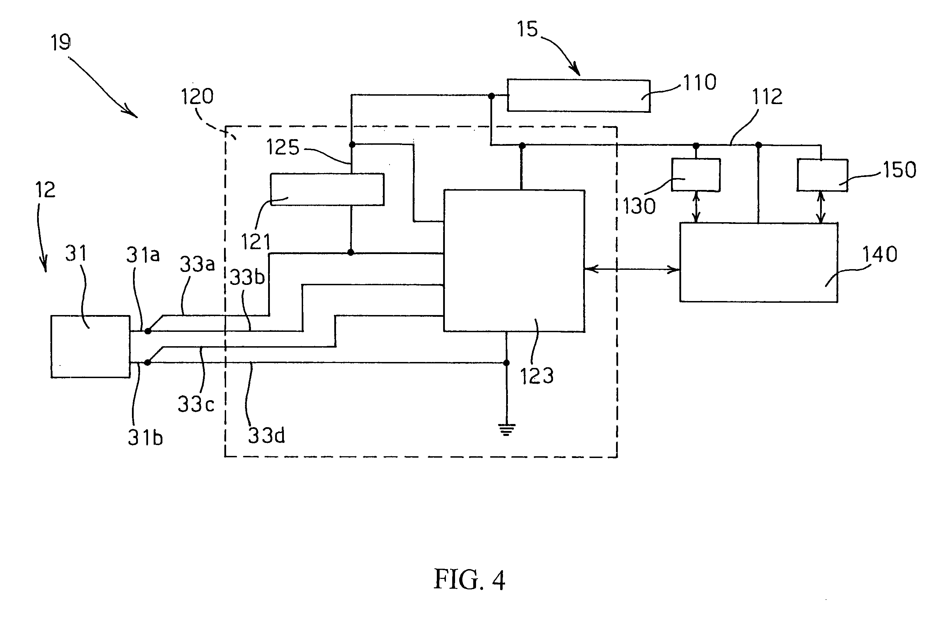

In the preferred embodiment, the managing circuit 15 (see Figure 4) comprises a power-supply managing block 110, a measuring block 120, a memory block 130, a transmitting/receiving (TX/RX) block 150 and a control block 140. The control block 140 is designed for controlling the measuring block 120, the memory block 130 and the TX/RX block 150, as it will be described in detail later on.

The power-supply managing block (power-supply circuit) 110 comprises, for instance, a voltage controlling circuit of the type LT1019IS8-5 produced by the firm Linear Technology, which is connected to the different blocks of the managing circuit 15 through connectors 112, known per se, and which is suitable for electrically supplying the connected blocks.

Preferably, the power-supply circuit 110 comprises one or more supply batteries, such as disposable batteries or rechargeable batteries, as well as power-supply managing circuit elements suitable for preserving the life of the batteries or for allowing their recharging.

In further embodiments, the power-supply circuit 110 can also be connected, for instance, to external power-supply sources, capable of supplying the managing circuit 15 from the outside.

In the preferred embodiment, the measuring block 120 comprises a ratiometric type measuring circuit, suitable for detecting electric resistance variations without being impaired by possible variations of the supply voltage.

More particularly, the measuring block (ratiometric circuit) 120 comprises an analog / digital converter (AD converter) 123, known per se, for instance a LTC2410IGN device produced by the firm Linear Technology, and a standard resistor 121, known per se, for instance a SMR1D 5K000T 0,01 % precision resistor produced by the firm Vishay.

In the preferred embodiment, the AD converter 123 comprises a first terminal that is connected to a first terminal 125 of the standard resistor 121, a second terminal that is connected to a second terminal of the standard resistor 121 and to the extension wire 33a, a third terminal connected to the extension wire 33b and a fourth terminal that is connected to the extension wire 33c, which is, in turn, connected to the extension wire 33d and grounded.

Such a circuit arrangement achieves a series connection of the standard resistor 121 with the sensitive element 31, which, when in operation, acts as a variable resistor depending on temperature variations, as it will be easily understood by the person skilled in the art.

Thanks to the series connection of the standard resistor 121 to the sensitive element 31, the measuring block 120, as disclosed, allows the AD converter to detect the ratio between standard resistor and variable resistor, independently from the supply voltage variations and from the operating temperature to which the handle is subjected. As it will be easily understood by the person skilled in the art, the voltage distribution at the ends of the resistors does not depend upon the overall voltage applied to the resistors series, but only upon the resistors resistance values, since the current that flows through the resistors is identical and the value of the standard resistor 120 should be considered as constant.

According to such an arrangement, the AD converter 123 is thus capable of generating as output signal a digital signal that is proportional to the ratio between the variable resistance of the sensitive element 31 and the resistance of the standard resistor 121.

In the preferred embodiment, the memory block (memory) 130 comprises an EEPROM memory, known per se, for instance a DS2433S type EEPROM produced by the firm Dallas, which is connected, in a known manner, to the control block 140 and which is suitable, for instance, for being read by the control block 140 itself during operation of the system 10.

The memory 130 preferably comprises stored therein some characteristic parameters of the sensor 12, that can be stored, for instance, during the calibration procedure of the sensor 12, as it will be described later on.

More particularly, the memory 130 comprises, for instance:
- a unique, identifying number of the sensor 12;
- calibration coefficients of the sensor 12, such as (but not limited to) the sensor characteristic parameters according to IEC 60751 standard, i.e. A, B, C, R0 of the socalled Callendar - Van Dusen interpolating curve;
- information concerning conversion and processing of data (filters, number of samples and the like);
- information concerning the most recent calibration of the sensor (date, values, and so on).

It is evident that the above list is not intended to be complete and, accordingly, other information can also be stored in the memory 130, without departing from the scope of the present disclosure.

The TX/RX block 150 comprises, for instance, a wireless data transmitting/receiving unit, known per se, for instance a blue-tooth protocol data transmitting/receiving unit.

Obviously, in other alternative embodiments, the TX/RX block (unit) can also be a data transmitting/receiving unit with a different protocol, for instance a WLAN, ZIGBEE, etc. protocol, without departing from the scope of the present disclosure.

The TX/RX unit 150 is connected, in a known manner, to the control block 140 and it is suitable for exchanging with the control block 140 information to be transmitted to / received from the external device 18.

In the preferred embodiment, the control block (unit) 140 comprises a programmable microprocessor, for instance the MSP430 microprocessor produced by the firm Texas, and it is connected, in a known manner, to the AD converter 123, to the memory 130 and to the TX/RX unit 150.

On the basis of the programs that have been developed during the design phase of the system 10 and that have been stored, for instance, in the control unit 140, the control unit 140 itself is capable of managing the units connected thereto.

More particularly, according to the present embodiment, the control unit 140 is suitable for:
- reading data coming from the AD converter 123 and converting them into temperature measurements
   - on the basis of the data or coefficients stored in memory 130; or, in case these data are not stored in the memory 130;
   - on the basis of data stored in the control unit 140 itself (for instance, standard conversion coefficients in accordance with international regulations);
- activating the communication with the external device 18 for transmitting, for instance, values of temperature measurements or for receiving activation commands for performing the measurements, as it will be described in detail later on;
- receiving commands for programming the control unit 140 itself and/or for storing information in the memory 130.

The external device 18, for instance a hand-held computer, a mobile phone, a portable personal computer or the like, is provided with communication devices 181 compatible with the communication devices of the TX/RX unit 150 and it comprises stored therein at least one program 183, for instance a program developed in the design phase of the system 10, suitable for exchanging information, for instance in a protected way, with the managing circuit 15. In the preferred embodiment, this program 183 comprises, for instance, the following functions:
- selection of a determined managing circuit 15 and associated sensor 12 (hereinafter referred to as a whole as measuring apparatus 19);
- activation of commands for programming the control unit 140 of the managing circuit 15;
- activation of commands for displaying information exchanged with the managing circuit 15;
- activation of commands for storing information concerning the use of the sensor (LOG information) on the external device, so as to allow the signalling of the need for a new calibration of the sensor, for instance by means of displayed instructions;
- activation of commands for calibrating the sensor 12.

Advantageously, the system 10 as disclosed above is designed so as to exchange information with common use external devices 18, without requiring specific devices, since only the interface program on the external device 18 is needed.

Still more advantageously, thanks to the disclosed architecture, it is further possible to carry out, with a single external device 18, different functions on a plurality of measuring apparatuses 19, such as:
- reading of the carried out measurements;
- calibration;
- processing;
- programming.

The assembling procedure of the sensor 12 is as follows.

In a first step, according to the preferred embodiment, it is provided that the external sheath assembly 27 (see Figure 2) is manufactured by welding the bottom 73 and the underhead sleeve 75 at the ends of the metallic sheath 71.

In a second step, which can be also carried out simultaneously to the first one, the terminals 31a and 31b (see Figure 3) of the sensitive element 31 are welded to the respective pairs of extension wires 33a, 33b and 33c,33d.

In a third step, the extension wires 33a, 33b, 33c, 33d are inserted in the plurality of insulating elements 35a,35b,35c,35d so as to cover the length of the wires and they are kept spaced apart by the insulating discs 37, provided in a number suitable for preventing mechanical stresses.

Once the second and third steps are over, the sensor assembly 23 is complete.

In a fourth step, the sensor assembly 23 is inserted into the internal sheath assembly 25. In this step, it is provided that a feed-through element is applied at the second end (frusto-conical end) 55, said feed-through element being designed so as to allow the extension wires 33a, 33b, 33c, 33d to go out through suitable through-holes; in the preferred embodiment, the feed-through element 57 has a cylindrical shape, is provided with through-holes (for the extension wires) and has a diameter suitable for allowing the insertion of the feed-through element 57 into the frusto-conical end 55 of the internal sheath assembly 25, so as to act as a "stopper" in the sealing of the sensor 12.

In the preferred embodiment, the feed-through element is made of Teflon (PTFE - PolyTetraFluoroEthilene).

In a fifth step, the sensor assembly 23 associated to the internal sheath assembly 25 is inserted into the external sheath assembly 27 and secured thereto.

More particularly, the fastening of the sensor assembly 23 associated to the internal sheath assembly 25 is carried out by inserting a bonding agent, for instance a silicon bonding agent, in the interstices between the frusto-conical end 55 of the internal sheath assembly and the feed-through element 57 and between the frusto-conical end and the underhead sleeve 75 of the sheath assembly.

Once the fourth and fifth steps are over, the assembly of the sensor 12 is complete.

In a sixth step, the so assembled sensor 12 undergoes a thermal treatment; for instance the sensor is inserted in a furnace and kept at temperatures higher than 450°C for about 2 hours, so as to eliminate any trace of water vapour inside the thermometer sheath, thus ensuring the electric insulation of the sensor and preventing the metallic oxidation caused by water residues.

In a seventh step, the sealing is carried out by maintaining the sensor 12 at temperatures higher than 350°C, thus allowing the closing of the thermometer in an ultra-dry environment, and with internal pressure close to the operating internal pressure at maximum temperature, and pouring a bonding agent, for instance a silicone bonding agent, again in the same regions as in the fifth step and also in the through-holes of the feed-through element 57, which turns out to act as a "stopper".

In order to eliminate possible mechanical stresses due to the assembling, an eighth step of annealing at temperatures of about 450°C for about 4 hours is provided.

In further embodiments, the sealing can be carried out by filling the external sheath 27 and internal sheath 25 with an inert gas, in order to prevent condensation problems at sensor operating low temperatures caused by possible moisture traces.

In a ninth step, the extension wires 33a,33b,33c,33d are welded to the managing circuit 15, which is arranged for instance in accordance with the above-disclosed block diagram; for instance, the power supply batteries (or battery) are successively associated to the managing circuit 15.

The handle 14 is then secured to the sensor 12, for instance by means of suitable threads made in the sleeve 75 welded to the sheath 71 and in the handle 14, thus impermeably protecting the managing circuit 15.

Once this step is over, the system is ready for operation.

The operation of the above-described system 10 is as follows.

In a first step, if a measure that can be referred to a standard should be obtained, it is provided that the calibration of the sensor 12 is carried out. Otherwise, this calibration is not necessary.

Following this first step, wherein an authorised calibration centre provides parameters (or calibration coefficients) in accordance with the used international regulations, said parameters are stored in the memory 130 by means of commands sent by the external device 18 and carried out by the control unit 140.

Once the calibration step is over, the system 10 is ready to be employed for measuring temperatures.

For instance, when temperature measurements have to be carried out, the sensor is immersed in the substance the temperature of which should be detected and, further to commands transmitted by the external device 18 to the managing circuit 15, the managing circuit 15 measures the substance temperature on the basis of:
- the resistance detected by the sensitive element;
- the parameters stored in the memory 130; and it transmits the measured temperature to the external device 18 for displaying.

The above-disclosed system has the advantage of being particularly stable in time thanks to the fact that the sensor comprises, in the preferred embodiment, extension wires made of the same material as the terminals of the sensitive element and welded to these terminals so as not to pollute with other materials the connection between the terminals of the sensitive element and the extension wires.

Moreover, thanks to the interface program for external devices, the above-disclosed system allows to control the operation of the measuring apparatus by means of common devices such as hand-held computers, mobile phones, personal computers and the like.

This system can also be employed for controlling several measurement apparatuses by means of a single device, without the need for interconnecting cables, that should be disconnected from a measuring apparatus in order to be connected to another one. The operation of controlling several managing circuits by means of a single external device can also be carried out by time sharing the measurements over several managing circuits.

Obvious modifications or variations concerning the sizes, shapes, materials, components circuit elements, connections and contacts as well as the details of the circuits, of the disclosed architecture and of the operating method can be brought to the above disclosure without departing from the scope of the invention as defined by the following claims.

## Claims

1. Temperature measuring system comprising
- a sensor (12) arranged for generating signals representing the temperature of a substance by means of electrical resistance values;
- a managing circuit (15) connected to the sensor and arranged for measuring the temperatures of the substance on the basis of said values;
- a control circuit (18) connected to the managing circuit and arranged for displaying the measured temperatures;
**characterised in that** said sensor (12) comprises:
- a sensitive element (31) having at least two rheophores (31a,31b) made of a determined material;
- a plurality of interconnecting wires (33a,33b,33c,33d) made of said determined material and having respective ends connected to said rheophores (31a,31b) and to said managing circuit, respectively;
- at least one metallic sheath (71) designed so as to contain said sensitive element (31) and said wires (33a,33b,33c,33d) sealed in an inert gas or in dry air.

2. System according to claim 1, **characterised in that** said determined material is platinum, preferably 99,9999% pure platinum, or silver, 99,9999% pure, and **in that** said rheophores (31a,31b) are connected to said wires (33a,33b,33c,33d) by hydrogen welding.

3. System according to claim 1 or 2, **characterised in that** said sensor (12) comprises insulating means (35a,35b,35c,35d,37), made of quartz or of an inert material with equivalent electric insulation upon temperature variations and equivalent impermeability to polluting agents or of alumina and designed for electrically insulating said wires (33a,33b,33c,33d) from said metallic sheath (71).

4. System according to claim 3, **characterised in that** said insulating means (35a,35b,35c,35d,37) comprises:
- insulating elements (35a,35b,35c,35d) designed so as to individually insulating said wires (33a,33b,33c,33d);
- insulating discs (37) designed so as to maintain said wires (33a,33b,33c,33d) equidistant from one another;
- a sheath made of quartz or equivalent material designed so as to contain said insulating elements (35a,35b,35c,35d) and said insulating discs (37).

5. System according to claim 1 or 2, **characterised in that** said managing circuit (15) comprises connecting means (150) arranged for exchanging information with said control circuit (18) by means of a preferably wireless connection.

6. System according to claim 5, **characterised in that** said managing circuit comprises memory means arranged for storing in memory calibration parameters of said sensor (12).

7. System according to claim 6, **characterised in that** said managing circuit comprises measuring means (120,140) comprising a standard resistor (121) and designed for measuring the substance temperatures by means of ratiometric type measurements on the basis of said calibration parameters of said sensor (12).

8. System according to any one of claims 5 to 7, **characterised in that** said control circuit (18) comprises:
- communication means (181) arranged for exchanging information with said connecting means (150); and
- processing means (183) designed for selectively control a plurality of managing circuits (15) by means of said communications means.

9. Sensor to be employed in a temperature measuring system, said sensor comprising:
- at least a sensitive element (31) having at least two rheophores (31a,31b) and arranged for generating signals representing a substance temperature through values of electric resistance at the ends of said two rheophores (31a,31b);
- at least a plurality of interconnecting wires having at least first ends connected to said rheophores (31a,31b);
- at least a metallic sheath (71) designed so as to contain said sensitive element (31) and said wires (33a,33b,33c,33d);
**characterised in that** said at least two rheophores (31a,31b) and said wires (33a,33b,33c,33d) are made of a single material and **in that** said metallic sheath (71) is sealed in an inert gas or in dry air.

10. Sensor according to claim 9, **characterised in that** said single material is platinum or silver and **in that** said rheophores are connected to said wires (33a,33b,33c,33d) by hydrogen welding.

11. Sensor according to claim 9 or 10 **characterised in that** it comprises insulating means (35a,35b,35c,35d,37) made of quartz or alumina or equivalent materials and designed for electrically insulating and preserving from polluting agent said wires (33a,33b,33c,33d) from said metallic sheath (71).

12. Sensor according to clam 11, **characterised in that** said insulating means (35a,35b,35c,35d,37) comprises:
- insulating elements (35a,35b,35c,35d) designed so as to individually insulating said wires (33a,33b,33c,33d);
- insulating discs (37) designed so as to maintain said wires (33a,33b,33c,33d) equidistant from one another;
- a sheath made of quartz or equivalent material designed so as to contain said insulating elements (35a,35b,35c,35d) and said insulating discs (37).

13. Managing circuit of a sensor according to any one of claims 9 to 12, said managing circuit being connected to said sensor and being arranged for measuring the substance temperatures on the basis of said electric resistance values, **characterised in that** it comprises connecting means (150) arranged for exchanging information with an external control circuit (18), through a preferably wireless connection.

14. Managing circuit according to claim 13, **characterised in that** it comprises memory means (130) designed for storing calibration parameters of said sensor (12).

15. Managing circuit according to claim 14, **characterised in that** it comprises:
- measuring means (120) comprising a standard resistor (121) and designed for generating electric signals representing the substance temperatures by means of ratiometric type comparisons;
- a control unit (140) connected to said memory means (130) and to said measuring means (120) and arranged for measuring said substance temperature on the basis of said ratiometric type comparisons and of said stored calibration parameters.

16. Method for assembling a sensor of a temperature measuring system, said sensor comprising at least a temperature sensitive element (31) having at least two rheophores (31a,31b) and being arranged for generating signals representing a substance temperature through values of electric resistance at the ends of said two rheophores (31a,31b), and at least a plurality of interconnecting wires to be connected to said sensitive element (31) and to a managing circuit arranged for measuring temperatures on the basis of said values, said method comprising the step of
- manufacturing a metallic material sheath (71) having a first end closed by a bottom (73) and an open second end,
said method being **characterised in that** it comprises the steps of:
- connecting by welding said wires to said rheophores, said wires being made of the same material as said rheophores;
- inserting said sensitive element and said wires into said metallic sheath;
- sealing said second end in an inert gas or in dry air by means of a sealing material.

17. Method according to claim 16, **characterised in that** said step of inserting said sensitive element and said wires into said metallic sheath comprises the steps of:
- inserting said wires into corresponding insulating elements;
- inserting said insulating elements into insulating discs arranged for maintaining said wires equidistant from one another;
- inserting said insulating discs into a sheath that is electrically insulating and impermeable to polluting agents.
